# EUROPÄISCHE PATENTSCHRIFT

(11) **EP 1 415 452 B1**
(45) Veröffentlichungstag und Bekanntmachung des Hinweises auf die Patenterteilung: **18.10.2006**
(21) Anmeldenummer: 02754424.6
(22) Anmeldetag: 24.07.2002
(51) Int. Cl.: H04L 29/06

(54) **KOPPLUNGSMITTEL FÜR EINE DATENVERARBEITUNGSVORRICHTUNG**
COUPLING MEANS FOR A DATA PROCESSING DEVICE
MOYEN DE COUPLAGE D'UN DISPOSITIF DE TRAITEMENT DE DONNEES

(30) Priorität: 07.08.2001 DE 10138658
(43) Veröffentlichungstag der Anmeldung: 06.05.2004
(73) Patentinhaber: Fujitsu Siemens Computers GmbH, 80807 München (DE)
(72) Erfinder: KELLERER, Bartholomäus, 81547 München (DE); KUEBLER, Hans, 82205 Gilching (DE); REITENSPIESS, Manfred, 85635 Siegertsbrunn (DE)
(74) Vertreter: Epping - Hermann - Fischer
(86) Internationale Anmeldenummer: PCT/DE2002/002713
(87) Internationale Veröffentlichungsnummer: WO 2003/017611

(56) Entgegenhaltungen:
- EP-A- 0 817 445
- US-A- 5 951 694
- US-A- 6 097 882
- BAKER M ET AL: "CLUSTER COMPUTING: THE COMMODITY SUPERCOMPUTER" SOFTWARE PRACTICE & EXPERIENCE, JOHN WILEY & SONS LTD. CHICHESTER, GB, Bd. 29, Nr. 6, Mai 1999 (1999-05), Seiten 551-576, XP000823952 ISSN: 0038-0644

## Beschreibung

Die Erfindung betrifft eine Datenverarbeitungsvorrichtung mit einer Kommunikationsschnittstelle zur Verbindung der einem ersten Netzwerkknoten zugeordneten Datenverarbeitungsvorrichtung mit einem Netzwerk und mit Kopplungsmitteln zur Bereitstellung von verfügbarkeitserhöhenden Funktionen. Die Erfindung betrifft weiterhin ein Verfahren zur Erhöhung der Verfügbarkeit von Dienstleistungen einer Datenverarbeitungsvorrichtung.

Traditionelle Netzwerke werden vor allem in der Telekommunikation eingesetzt. Diese Netze sind dadurch gekennzeichnet, daß sie eine sogenannte "end-to-end-Kontrolle" besitzen. Das heißt, daß die physikalische Verbindung vom Anfangs- bis zum Endpunkt festlegbar ist. Der Status der Netzwerkelemente ist immer klar definiert. Der Vorteil solcher Netze liegt darin, daß sehr zuverlässige Übertragungswege realisierbar sind, indem die Übertragung nur über äußerst zuverlässige Komponenten geführt wird. Dies wird also erreicht durch die extrem hohe Zuverlässigkeit der einzelnen Netzbestandteile und durch ein hoch entwickeltes und dadurch teures Netzführungssystem.

Der Nachteil solcher Netze ist zum einen die hohe Kompliziertheit, zum anderen eine Beschränkung der Leistungsfähigkeit durch die strengen Definitionen der Geräteparameter. Dies führt letztlich zu einem hohen Kosten-/Leistungsverhältnis für alle Netzbestandteile.

Ein weiterer Nachteil besteht darin, daß die in dem Netzwerk erbringbaren Dienstleistungen durch das Netz und die Elemente selber definiert sind und somit nur sehr begrenzt zur Verfügung stehen. Kundenbezogene und flexible Dienstleistungen können in einem solchen Netz nicht angeboten werden.

Im Zusammenhang mit der Verbindung bislang getrennter Netze wurden sogenannte IP-Netze aufgebaut (IP = Internet Protokoll), die auch den neuen Anforderungen bezüglich anzubietender Dienstleistungen gerecht werden. Diese sind mit intelligenten Knotenpunkten, einer Vielzahl von Servern und darauf gespeicherten Daten verbunden, die zusammen für das Durchführen einer Serviceleistung zusammenwirken können. Die Übertragung von Daten erfolgt paketweise. Dabei wird eine zu übertragende Datenmenge in einzelne Pakete aufgeteilt, die getrennt transportiert werden. Bei dem Empfänger werden die Pakete wieder zusammengesetzt. Die Datenverarbeitungsvorrichtungen sind in dem Netz nicht ausgezeichnet. Unter einem Netzwerk mit nicht ausgezeichneten Datenverarbeitungsvorrichtungen sind solche Netzwerke zu verstehen, bei denen die einzelnen Datenverarbeitungsvorrichtungen nicht an zentraler Stelle registriert und dort konfigurierbar sind. Sogenannte Cluster fallen dagegen nicht in diese Netzwerkkategorie, da in Clusternetzwerken die einzelnen Datenverarbeitungsvorrichtungen exakt bekannt und konfiguriert sind. Dabei ist die genaue Hardwarekonfiguration und der Typ der Anlagen von wesentlicher Bedeutung für die Funktionsfähigkeit der zusammengeschlossenen Datenverarbeitungsvorrichtungen.

Durch IP-Netze, die solche Netze mit nicht ausgezeichneten Datenverarbeitungsvorrichtungen sind, ergeben sich völlig neue Randbedingungen für das Anbieten von Dienstleistungen in Netzwerken. Dienstleistungen sind nicht unbedingt von Transportmechanismen im Netz abhängig. Multi-Media-Inhalte sind übertragbar. Da Daten nicht in Echtzeit übertragen werden müssen, kann die Übertragung mit einer dynamischen Bandbreite erfolgen, die auch während einer Dienstleistung geändert werden kann. Dabei ist der Datentransport und der Service voneinander getrennt und kann von verschiedenen Anbietern bereitgestellt werden. Die Adressierung einer Dienstleistung kann dabei sowohl logisch als auch nach Inhalt erfolgen.

IP-Netze bringen aber auch Nachteile mit sich. So ist eine end-to-end Kontrolle innerhalb des Netzwerkes und die damit verbundene Möglichkeit der Bereitstellung hochverfügbarer Verbindungen und Knoten nicht möglich, da die Knoten innerhalb des Netzes, über die der Datentransport erfolgt, dynamisch festgelegt werden können. Während bei klassischen Telekommunikationsnetzen das gesamte Netz oder zumindest ein großer Teil des Netzes einem Betreiber gehört und von diesem verwaltet wird, gehören die Netzelemente, Dienstleistungen und dazugehörigen Inhalte in einem IP-Netz vielen verschiedenen Besitzen. Auch dadurch ist eine end-to-end Kontrolle nicht möglich. Einer Beschränkung des Netzwerkes auf nur sehr leistungsfähige Komponenten, um eine hohe Verfügbarkeit zu erreichen, widerspricht der Offenheit des Netzes und dem freien Zugriff zu Dienstleistung sowie der freien Einleitung von Dienstleistung in das Netz. Aus der Integrierbarkeit beliebiger Komponenten resultierende Kostenvorteile würden verlorengehen.

Problematisch ist bei IP-Netzen also, daß nicht die oftmals geforderte hohe Verfügbarkeit sichergestellt werden kann. Die Erhöhung der Verfügbarkeit eines einzelnen Netzknotens erhöht nicht in einem ausreichenden Maße die Gesamtsystemzuverlässigkeit aller zur Bereitstellung eines Dienstes benötigten oder verwendeten Komponenten. Die Zuverlässigkeit aller betroffenen Netzbestandteile kann nicht hergestellt werden, da dies zu viele sind und darüber hinaus auf der ganzen Welt verteilt sein können. Die Zuverlässigkeit kann auch nicht dadurch erreicht werden, daß eine end-to-end-Kontrolle vorgenommen wird, da dies in einem IP-Netz nicht vorgesehen ist und die erforderlichen Verwaltungsprozeduren nicht verfügbar sind.

Eine bekannte Lösung des Problems ist die Übernahme von Konzepten von klassischen Telekommunikationsnetzen und deren Anwendung in IP-Netzwerken. Demnach können zum Beispiel anfällige Interkontinentalverbindungen durch einen bestimmten Betreiber bereitgestellt und die verbleibenden, innerkontinentalen Wege über das Internet abgewickelt werden. Durch die Auswahl dieses bestimmten Betreibers durch einen Benutzer kann dieser erreichen, daß die Verbindung über das IP-Netzwerk bestimmten Qualitätskriterien genügt. Die Flexibilität des IP-Netzwerks geht dann aber wieder verloren.

Eine andere Lösungsmöglichkeit sind sogenannte intelligente Netzwerke. In diesen Netzwerken ist die Art der Dienstleistungen, die bereitgestellt werden können, beschränkt. Intelligente Netzwerke sind auf zentrale Datenbanken gestützt und bilden eine einem Telefonnetzwerk übergeordnete Schicht. Die Verfügbarkeit der zentralen Datenbanken kann durch den Einsatz von Clustertechniken in ausgewählten großen Dienstleistungsknoten gewährleistet werden. Dies hat aber extrem große Dienstleistungsknoten zur Folge und beeinflußt allenfalls die Funktion eines einzigen Knotens.

Die "Intelligenz" zukünftiger IP-basierter Netzwerke ist jedoch nicht auf zentrale Knoten beschränkt sondern ist auf alle Netzbestandteile des IP-Netzes verteilt, so daß Maßnahmen an einzelnen Knoten bei weitem nicht ausreichend sind.

Ein dritter bekannter Lösungsweg besteht darin, eine hohe Verfügbarkeit eines Dienstes durch redundante Replikation von Hardware innerhalb eines Custers zu erlangen.

Beispielsweise ist gemäß der Druckschrift US 6,097,882 zur Bereitstellung eines Dienstes eine Vielzahl von Servern zusammen mit einem sogenannten Replikator vorgesehen, an den die Anfragen zur Nutzung des Dienstes gerichtet werden. Der Replikator leitet Anfragen von Nutzern (Clients) an die Server in Abhängigkeit der Verfügbarkeit der Server bzw. deren Auslastung weiter. Die Verfügbarkeit des Dienstes wird durch den Einsatz mehrerer Server für einen Dienst erhöht.

Aus der Druckschrift EP 0 817 445 A2 ist ein Verfahren zur Zugriffssteuerung von Clients auf eine Ansammlung von in einem Cluster angeordneten Servern bekannt. Dabei ist ein sogenannter Proxy-Server vorgesehen, der entweder eine Anfrage eines Clients an einen Server weiterleitet, oder dem Client eine Information zurückgibt, anhand derer der Client die Anfrage erneut direkt an einen zuständigen Server richten kann.

Beide Verfahren beruhen auf dem Einsatz einer festen Instanz (Replikator bzw. Proxy-Server), die Anfragen von Clients einem Server zuteilt. Bei diesen Verfahren ist die Arbeitsleistung der der zuteilenden Instanz zugeordneten Server gebunden, da Dienste dieser Server nur über den Knoten, in dem die zuteilende Instanz eingerichtet ist, erreichbar sind.

Eine Aufgabe der Erfindung ist daher, eine Datenverarbeitungsvorrichtung anzugeben, mit das Anbieten von Dienstleistungen mit hoher Zuverlässigkeit auf flexible Weise möglicht ist. Es ist ferner eine Aufgabe der Erfindung, ein Verfahren zur Erhöhung der Verfügbarkeit der Dienstleistungen einer Datenverarbeitungsvorrichtung aufzuzeigen.

Diese Aufgabe wird durch eine Datenverarbeitungsvorrichtung gemäß Patentanspruch 1 und ein Verfahren gemäß Patentanspruch 12 gelöst.

Die Datenverarbeitungsvorrichtung bedient sich gemäß der Erfindung Kopplungsmitteln zur Bereitstellung von verfügbarkeitserhöhenden Funktionen in Verbindung mit mindestens einer weiteren, einem weiteren Netzwerkknoten zugeordneten, mit dem Netzwerk verbundenen, Kopplungsmittel aufweisenden Datenverarbeitungsvorrichtung, wobei das Netzwerk ein solches Netzwerk ist, bei dem Datenverarbeitungsvorrichtungen nicht an einer zentralen Stelle registriert und dort konfigurierbar sind.

Durch den Einsatz der Kopplungsmittel ist es möglich, beliebige Datenverarbeitungsvorrichtungen, die in einem Netzwerk vorhanden sind, so auszustatten, daß durch ein Zusammenwirken dieser Datenverarbeitungsvorrichtungen eine erhöhte Verfügbarkeit erreichbar ist. Der Zusammenschluß mehrerer Datenverarbeitungsanlagen mit erfindungsgemäßen Kopplungsmitteln zur Bereitstellung verfügbarkeitserhöhender Funktionen wird im folgenden "virtueller Cluster" genannt.

Der Vorteil der erfindungsgemäßen Kopplungsmittel besteht somit darin, daß Standardhardwarekomponenten verwendet werden können, an die keine besonderen Anforderungen gestellt werden. Eine Abstimmung der Hardware der Datenverarbeitungsvorrichtungen ist nicht notwendig.

Ein weiterer Vorteil besteht darin, daß die Kopplungsmittel durch eine Ferninstallation hinzugefügt werden können, da es sich um eine reine Softwarekomponente handeln kann. Zum Aufbau eines Netzwerkes mit Datenverarbeitungsvorrichtungen, die in dem Netzwerk nicht ausgezeichnet sind, müssen somit lediglich von einer Stelle aus verschiedene Datenverarbeitungsvorrichtungen mit den erfindungsgemäßen Kopplungsmitteln versehen werden. Somit kann von einer zentralen Stelle aus ein Netzwerk aufgebaut werden, das Hochverfügbarkeitseigenschaften besitzt.

Darüber hinaus besteht gegenüber konventionellen Clustern, bei denen eine Datenverarbeitungsvorrichtung nur einem Cluster angehören kann, der Vorteil, daß bei einem "virtuellen Cluster" mit erfindungsgemäßen Kopplungsmitteln eine Datenverarbeitungsvorrichtung auch mehreren logischen Clustern angehören kann.

Weitere vorteilhafte Ausgestaltungen der Erfindung sind in Unteransprüchen angegeben.

Die Erfindung wird nachfolgend an Hand eines Ausführungsbeispiels näher erläutert. Es zeigt:
- Figur 1: den prinzipiellen Aufbau eines IP-Netzes bei der Abwicklung eines auf mehrere Knoten verteilten Dienstes,
- Figur 2: den Aufbau eines Knotens mit einem konventionellen Cluster,
- Figur 3: eine Anordnung eines Netzes mit mehreren Knoten mit erfindungsgemäßen Kopplungsmitteln,
- Figuren 4 bis 7: verschiedene Phasen bei der Abwicklung eines Dienstes bei Verwendung von Knoten mit erfindungsgemäßen Kopplungsmitteln.

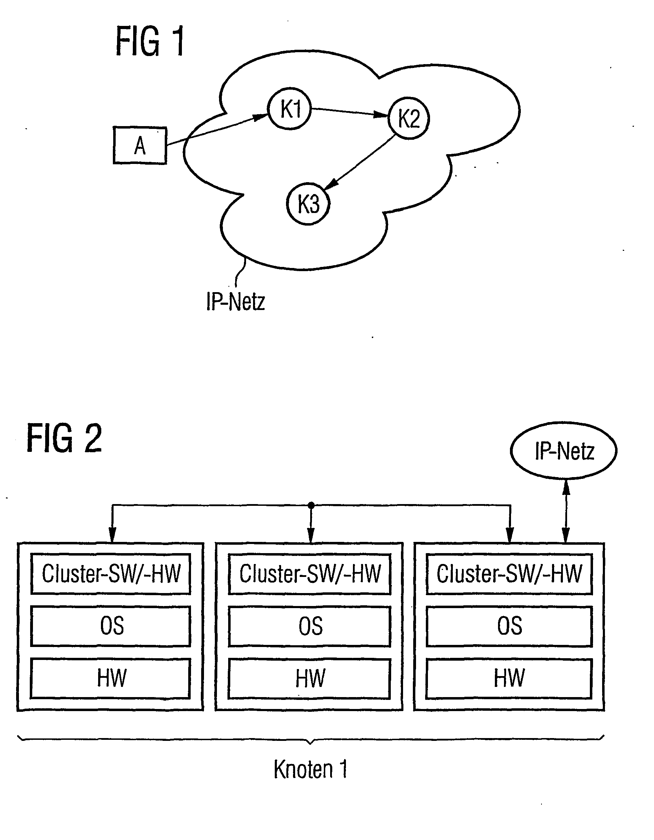

Bei der Darstellung von Figur 1 fordert ein Benutzer von einem Benutzerrechner A, im folgenden "Client" genannt, eine Dienstleistung in einem IP-Netz an. Das IP-Netz ist ein Netz mit nicht ausgezeichneten Knoten, wie es in der Beschreibungseinleitung erläutert wurde. Die Anfrage des Clients A erreicht zunächst einen Knoten K1, der den angeforderten Dienst alleine nicht bereitstellen kann. Daher leitet er eine weitere Anfrage an den Knoten K2 weiter zur Erbringung des Dienstbestandteiles, den der Knoten K1 nicht leisten kann. Ebenso ist der Knoten K2 nicht in der Lage, alle Dienste zur Erfüllung der Anfrage des Clients A zu erbringen und leitet daher eine Teilaufgabe an den Knoten K3 weiter. Zur Erfüllung der Anforderung des Benutzers A ist somit eine Kette von 3 Knoten K1 bis K3 notwendig.

Die Knoten K1 bis K3 sind in der Regel weder in der Hand eines einzigen Besitzers noch bestehen sie aus einer einheitlichen Hardware und Software. Die Zuverlässigkeit der Knoten K1 bis K3 ist daher in der Regel sehr unterschiedlich. Der Knoten K3 könnte beispielsweise ein Cluster aus mehreren Servern sein, der Zahlungsvorgänge bei einer Bank abwickelt, um die vom Client A angeforderte Dienstleistung abzurechnen. Ein hochverfügbarer Cluster kann dabei eine Zuverlässigkeit von 99,999% erreichen, was einer Ausfallzeit von 5 Minuten pro Jahr entspricht. Aus Sicht des Clients A ist jedoch nur die Zuverlässigkeit der gesamten Kette aus den drei Knoten K1,K2 und K3 von Bedeutung. Wenn einzig der Knoten K3 hochverfügbar ausgerüstet ist, ergibt sich damit nicht notwendigerweise' eine hohe Verfügbarkeit für die gesamte Dienstleistung.

Um einen einzelnen Knoten hochverfügbar zu machen, ist die Anwendung einer Clusterlösung gemäß Figur 2 denkbar. Jeder Server des Clusters weist eine Hardware HW, ein Betriebssystem OS und eine Cluster-Software bzw. -Hardware auf. Die Server sind miteinander verbunden, wobei die Cluster-Software/-Hardware die Steuerung verfügbarkeitserhöhender Funktionen vornimmt.

Die Gesamtheit der verschiedenen Server, also der Cluster, ist nun mit einem Netzwerk, im vorliegenden Fall mit einem IP-Netz, verbunden. Dieser Knoten ist also dadurch hochverfügbar, daß lokal Maßnahmen vorgesehen sind zur Steigerung der Verfügbarkeit. "Lokal" kann in diesem Zusammenhang auch bedeuten, daß es sich beispielsweise um ein firmeninternes Netzwerk handelt, in dem mehrere Server zu einem Cluster verbunden sind, obwohl sie räumlich getrennt angeordnet sind. Lokal ist also in diesem Sinne so zu verstehen, daß die Hardware und Systemkonfiguration bekannt und aufeinander abgestimmt ist. Es erfolgt eine gemeinsame System- und Clusteradministration. Sämtliche Daten des Clusters sind an einer zentralen Stelle bekannt und abrufbar.

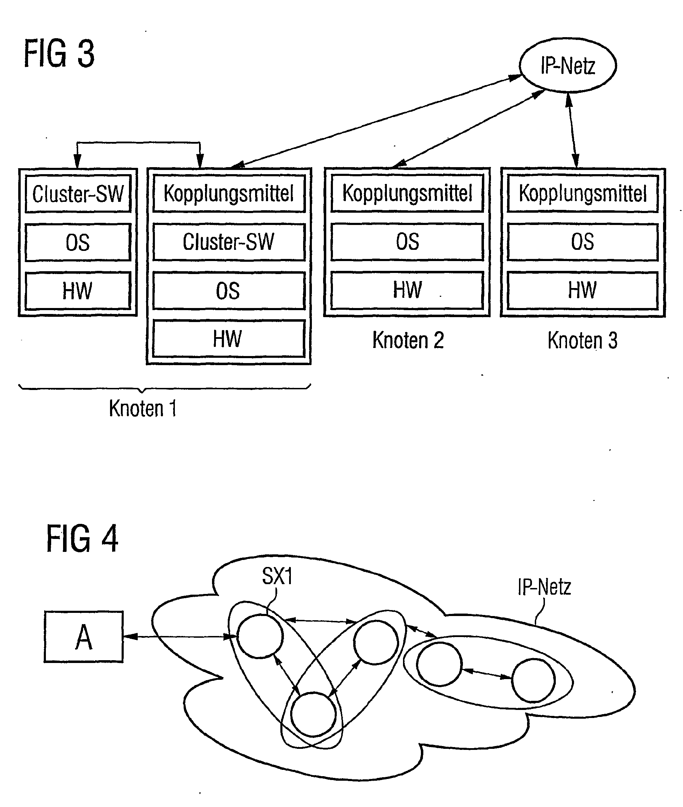

In der Figur 3 ist eine hochverfügbare Konfiguration dargestellt, wie sie gemäß der Erfindung ausgestaltet sein könnte. Es gibt Knoten (Knoten 1), die wie bisher durch lokale Maßnahmen hochverfügbar konfiguriert sind. Die Verfügbarkeit des Knoten 1 kann weiter dadurch gesteigert werden, daß zusätzlich erfindungsgemäße Kopplungsmittel vorgesehen sind, durch die die Ausführung verfügbarkeitserhöhender Funktionen über das IP-Netzwerk in Verbindung mit anderen Knoten möglich ist.

Ebenso kann ein einfacher Knoten, der selber keinen lokalen Cluster beinhaltet, dadurch hochverfügbar gemacht werden, daß Kopplungsmittel hinzugefügt werden, die eine Kopplung mit anderen Knoten und dadurch die Ausführung verfügbarkeitserhöhender Funktionen ermöglichen. Im Beispiel von Figur 3 kann eine Kopplung der Knoten 2 und 3 über erfindungsgemäße Kopplungsmittel und das IP-Netz eine ebenso hohe Verfügbarkeit ergeben wie ein lokaler Cluster bei Knoten 1 für sich alleine betrachtet.

Der Funktionsumfang der Kopplungsmittel ist so ausgelegt, daß übliche Funktionen eines lokalen Clusters auch für erfindungsgemäße virtuelle Cluster verfügbar sind. Für den Fall, daß die Kopplungsmittel bei einem lokalen Cluster zusätzlich zum Einsatz kommen, sind verfügbarkeitserhöhende Funktionen sowohl auf lokaler Ebene als auch über das IP-Netzwerk vorhanden.

Die verfügbarkeitserhöhenden Funktionen können beispielsweise darin bestehen, daß Mittel zur Speicherreplikation auf die zweite Datenverarbeitungsvorrichtung vorgesehen sind. Der Speicher einer Datenverarbeitungsvorrichtung wird also immer auf die zweite Datenverarbeitungsvorrichtung abgebildet, so daß beim Ausfall der ersten Datenverarbeitungsvorrichtung bzw. einer dortigen Störung auf das Speicherreplikat zurückgegriffen werden kann, um den Zustand vor Eintritt der Störung wieder herzustellen. Eine zweite Möglichkeit verfügbarkeitserhöhender Funktionen besteht darin, daß Berechnungen auf der ersten und einer zweiten Datenverarbeitungsvorrichtung parallel ausgeführt werden und das Ergebnis danach verglichen wird. Bei unterschiedlichen Ergebnissen kann auf das Vorliegen eines Fehlers geschlossen und entsprechende Fehlerbehandlungsmaßnahmen eingeleitet werden. Weiter ist es als verfügbarkeitserhöhende Funktion üblich, Zeitgeberobjekte redundant bereit zu stellen. Weiterhin kann eine gegenseitige Überwachung der Ansprechbarkeit der jeweils anderen Datenverarbeitungsvorrichtung vorgesehen werden. Dadurch ist feststellbar, wenn eine der Datenverarbeitungsvorrichtungen nicht mehr ordnungsgemäß funktioniert und die andere Datenverarbeitungsvorrichtung kann die Bearbeitung der anstehenden Aufgaben übernehmen. Optional kann in die andere Datenverarbeitungsvorrichtung soweit eingegriffen werden, daß eine nicht mehr funktionierende Anwendung beendet wird.

An dieser Stelle können aber auch viele andere Funktionen vorgesehen werden, die dem Fachmann geläufig und daher von der Erfindung umfaßt sind.

Bei all diesen Funktionen ist eine Realisierung in Software möglich. Ein enormer Vorteil der erfindungsgemäßen Kopplungsmittel liegt daher darin, daß kein tiefgreifender Eingriff in das System vorgenommen werden muß. Weiterhin ist vorteilhaft, daß eine Ferninstallation der Kopplungsmittel erfolgen kann. Dies ist vor allen Dingen dann wichtig, wenn kein tatsächlicher physikalischer Zugriff auf die anderen Datenverarbeitungsvorrichtungen möglich ist, was bei einem IP-Netzwerk wie dem Internet die Regel sein wird.

Wie die Möglichkeiten erfindungsgemäßer Kopplungsmittel ausgenutzt werden, ist im folgenden an Hand eines Anwendungsfalls erläutert.

Der Beispielfall betrifft einen Reisebestellservice. Dabei soll eine zunächst nicht näher bestimmte Reise gebucht und bezahlt werden. Ein Benutzer am Client A stellt eine Anfrage an einen ersten Knoten SX1 in einem IP-Netz (Figur 4). Dieser Knoten kann beispielsweise der Server eines Service-Providers sein. Zur Abwicklung einer vollständigen Reisebuchung sind folgende Aufgaben auszuführen.
- Identifizierung einer Reise durch Anfrage bei verschiedenen Service-Providern,
- Auswahl einer Teilmenge von interessierenden Reisen und Preisermittlung durch Zugriff auf die entsprechenden Service-Provider,
- Auswahl einer Reise und Durchführung der Buchung und
- Erstellung der Reiseunterlagen für den Kunden und Rechnungsstellung an den Kunden.

Wie in der Figur 4 dargestellt ist, werden im Verlauf der Erledigung dieser Teilaufgaben verschiedene Server von verschiedenen Dienstanbietern zusammenwirken müssen.

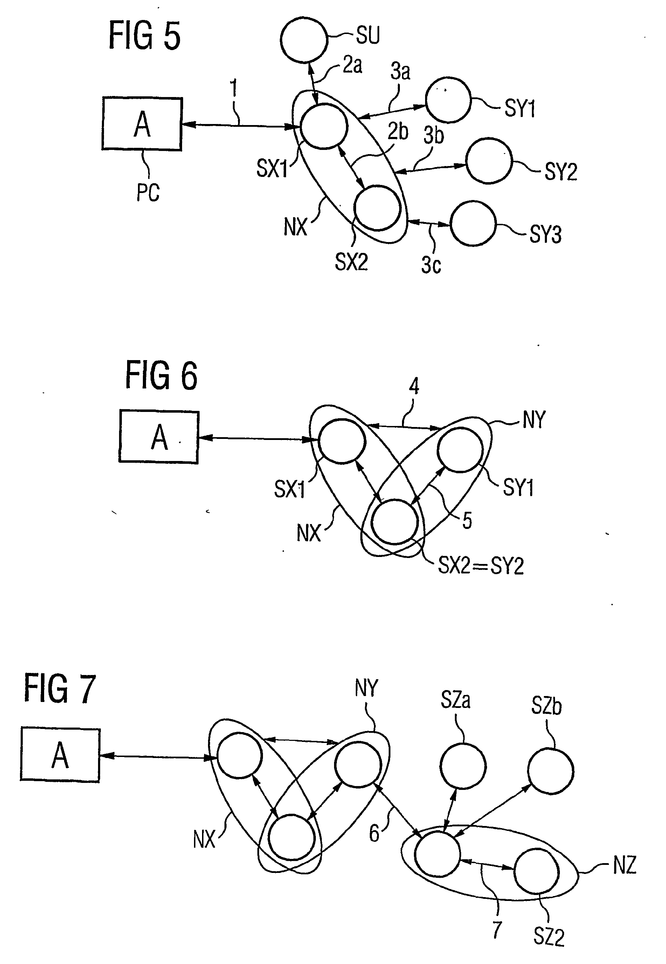

In der Figur 5 wendet sich der Benutzer am Client A an den Service-Provider-Knoten SX1. SX1 kann z. B. die Website eines Reiseveranstalters sein. Der Client A ist ein PC, der zum Datenaustausch mit dem Internet ausgerüstet ist. Nach Kontakt mit SX1 erkennt SX1, daß die Durchführung des angeforderten Reiseservice hohe Verfügbarkeitsanforderungen stellt. Nach Ausfall des Servers würde der Veranstalter möglicherweise den Kunden und den damit zu erzielenden Umsatz verlieren. Es muß daher sichergestellt werden, daß der Service in einer hochverfügbaren Umgebung abläuft. Anstatt den Knoten hochverfügbar gemäß Figur 2 auszustatten, wendet sich der Knoten SX1 an zwei ihm bekannte Nachbarknoten SU und SX2, die ebenfalls den Service "Reisebestellung" durchführen können.

Wie die Erkennung der Knoten erfolgt, die den gleichen Service anbieten können, ist nicht Gegenstand der Erfindung und wird hier nicht weiter ausgeführt. Eine einfache Möglichkeit ist die Administration solcher Dienste über gemeinsame, bei Änderungen gegenseitig zu aktualisierende Tabellen. Es wird ebenfalls angenommen, daß nur solche Knoten in der Tabelle verzeichnet sind, auf denen der angesprochene Service bereits installiert ist. Es könnte aber auch eine Beziehung sein, die die Ferninstallation des Service durch den Knoten SX1 erlaubt. Dieser Ansatz wird z.B. in den weit verbreitenden Peer-to-Peer Lösungen beim Musiktausch oder bei der gemeinsamen Berechnung von umfangreichen Algorithmen angewandt.

In einem Schritt 2a fragt zunächst der Knoten SX1 bei dem Knoten SU an, ob er bereit ist, als Backup für den Knoten SX1 zu fungieren. Die Antwort des Knotens SU fällt negativ aus. Mögliche Gründe sind, daß der Knoten bereits überlastet oder eine zulässige Höchstgrenze an Zugriffen überschritten ist. Eine andere Möglichkeit ist eine fehlende redundante Verbindung zwischen SX1 und SU oder eine nicht ausreichende Kommunikationsbandbreite.

In einem anschließenden Schritt 2b wendet sich der Knoten SX1 an den Knoten SX2 und bekommt dort eine positive Antwort. Daraufhin gehen SX1 und SX2 eine unter Umständen temporäre virtuelle Verbindung ein, es bildet sich also ein virtueller Cluster NX aus den beiden Knoten SX1 und SX2. Das bewirkt, daß die mit dem Client A begonnene sogenannte Session auf dem Knoten SX2 repliziert wird, das heißt die zwischen dem Client A und SX1 ausgetauschten Daten werden als Kontexte auf dem Knoten SX2 repliziert und Prozesse auf SX2 werden als Backup-Prozesse für die gleichen Prozesse auf dem Knoten SX1 konfiguriert.

Die Konfiguration geschieht durch Nutzung einer Datenbank, die über eine einheitliche Schnittstelle administriert wird. Dazu stehen spezielle Programmierschnittstellen zur Verfügung. Wesentliche Konfigurationsparameter dafür sind:
- Prozesse und ihre Funktionen im virtuellen Cluster,
- Verbindungen zwischen den Knoten(z.B. SX1 und SX2) und ihre Parameter; üblicherweise werden zwischen den Knoten Hochgeschwindigkeitsnetze wie z.B. Gigabit Ethernet oder 100baseT Ethernet eingesetzt,
- Namenskonventionen der administrierten Objekte (Kontexte, Timer, Dateien usw.),
- Überwachungsparameter (z.B. Wartezeit bis zur Feststellung eines Systemabfalls),
- Auditparameter über die zu überwachenden Objekte und zugehörige Recoverymaßnahmen,
- Meldekanäle zur Meldung von Events und Alarmen und
- Ablage von Statistik-Informationen.

Am Ende von Schritt 2 liegt folgender Zustand vor. Durch Anfrage bei verschiedenen Service-Providern wurde eine gewünschte Reise identifiziert. Eine Auswahl von interessierenden Reisen, z. B. anhand der angebotenen Preise, wurde durch Zugriff auf die entsprechenden Service-Provider getroffen. Der Knoten SX2 ist dabei als Backup-Knoten für SX1 konfiguriert und kann die notwendige Verfügbarkeit auch im Fehlerfall gewährleisten. Der Knoten SX1 holt jetzt im Auftrag von dem Client A konkrete Angebote von verschiedenen Reiseprovidern ein, die z.B. auch die Verfügbarkeit an speziellen Terminen beinhalten, und bietet sie dem Client A zur Auswahl an.

In Figur 5 stellen die Knoten SY1, SY2 und SY3 verschiedene Reiseanbieter dar. Dabei wird also auf Knoten zugegriffen, die nicht in den virtuellen Cluster NX eingebunden sind. Die Schritte 3a, 3b und 3c zur Anfrage bei den Reiseanbietern SY1, SY2 und SY3 sind unabhängig von dem ausgewählten Knoten SX1 oder SX2, da beide Knoten durch die Clusterbildung als gleichwertig für die Ausführung der Anfrage angesehen werden können.

Eine weitere Phase der Reisebuchung ist in Figur 6 dargestellt. In einem Schritt 4 erfolgt die konkrete Auswahl einer Reise und die Durchführung der Buchung. Dazu wird angenommen, daß einer der drei Knoten SY1, SY2 oder SY3 das gewünschte Angebot hat. Es wird im Beispiel angenommen, daß dies der Knoten SY1 ist. Wegen der finanziellen Bedeutung der Reisebuchung muß auch der Knoten SY1 hochverfügbar sein und geht daher eine zur Bereitstellung verfügbarkeitserhöhender Funktionen notwendige Verbindung mit einem zweiten Knoten SY2 ein. Dies wird durch erfindungsgemäße Kopplungsmittel bei den Knoten SY1 und SY2 ermöglicht.

SY1 hat bereits vorher SY2 als Backup-Rechner bestimmt (Schritt 5). SY2 steht also bereits in einer Hohchverfügbarkeitsbeziehung zu SY1 und bildet mit diesem somit einen virtuellen Cluster NY. Eine vorteilhafte Besonderheit ist, daß SY2 mit SX2 identisch sein kann. Der gleiche Knoten ist also sowohl Bestandteil des virtuellen Clusters NX als auch des virtuellen Clusters NY. Hierin besteht auch ein Vorteil gegenüber konventionellen lokalen Clustern, da bei konventionellen Clustern eine Einbindung eines Knotens beziehungsweise Servers in zwei Cluster nicht möglich ist.

Im Fehlerfall von SY1 heißt das, daß eine Buchungsanfrage vom Knoten SX1 an den Knoten SY2 gelenkt wird. Dies ist in der Figur 6 dadurch dargestellt, daß die Verbindung für Schritt 4 zwischen den beiden virtuellen Clustern NX und NY besteht, nicht zwischen speziellen Knoten dieser Cluster. Sollte neben SY1 auch SX1 ausfallen, so wird die Anfrage vom Client A allein von dem Knoten SX2 = SY2 beantwortet, da dort sowohl der Verbindungsservice zum Client A läuft als auch der Buchungsservice, den der Client A ausgewählt hat.

In der Darstellung von Figur 7 wird schließlich in den Schritten 6 und 7 die Erstellung der Reiseunterlagen für den Kunden und die Rechnungsstellung an den Kunden durchgeführt. Falls gewünscht kann auch eine Online-Abbuchung erfolgen.

Zunächst wird im Schritt 6 der geeignete Knoten für die Buchungsdurchführung und Abrechnung gesucht. Dieser ergibt sich beispielsweise aus der Bank, die der Kunde für eine automatische Abbuchung angegeben hat.

Ein solcher Knoten ist in der Darstellung von Figur 7 der Knoten SZ1. Im Unterschied zu den vorhergehenden Schritten wird hier eine Konfiguration gezeigt, in der der beanspruchte Service in einem komplett anderen virtuellen Cluster durchgeführt wird. Wichtig für eine Hochverfügbarkeit ist natürlich, daß auch die Verbindung 6 redundant vorhanden ist, um mehrere Verbindungspfade auch im Fehlerfall benutzen zu können. Dies gehört mit zur Auswahl eines geeigneten Partnerknotens. Außerdem ist zu bemerken, daß das Netz NX keine direkte Beziehung mehr zu einem Netz NZ hat, das durch den Knoten SZ1 und einen zweiten Knoten SZ2 gebildet wird. Das liegt daran, daß der ausgewählte Reiseservice-Anbieter im Netz NY den Buchungsdienstleister im Netz NZ verwendet. Darüber hinaus hat der Reiseanbieter über das Netz NZ keine Kontrolle oder Information.

Innerhalb des virtuellen Clusters NZ beziehungsweise zu dessen Herstellung können wiederum mehrere Schritte erforderlich sein. Beispielsweise versucht der Knoten NZ1 zunächst einen Knoten SZa oder einen Knoten SZb anzusprechen, um mit diesen einen virtuellen Cluster zu bilden. Im Bereich einer Bank ist aber denkbar, daß der Knoten SZa nicht dafür geeignet ist, Buchungen durchzuführen, sondern nur dafür vorgesehen ist, Kundeninformationen bereitzustellen. Die Möglichkeit einer Clusterbildung ist durch eine entsprechende Konfiguration des Knotens SZa derhalb verhindert.

Innerhalb des virtuellen Clusters NZ kann natürlich auch im Fehlerfall zwischen verschiedenen Knoten umgeschaltet werden, wenn diese eine entsprechende Hochverfügbarkeitsfunktionalität aufweisen.

In dem soeben beschriebenen Anwendungsfall ist also jedes Glied der Kette zur Ausführung eines komplexen Dienstes hochverfügbar. Dies wird nicht dadurch erreicht, daß einzelne Knoten mit Clustern hochverfügbar ausgerüstet werden, sondern es wird durch einen flexiblen Verbindung mit anderen Knoten erreicht, wobei die Knoten jeweils erfindungsgemäße Kopplungsmittel aufweisen, durch die bei Verbindung zweier Knoten verfügbarkeitserhöhende Funktionen bereitgestellt sind.

In einigen Fällen kann es vorteilhaft sein, von aufrufenden Knoten bzw. Clients transparent erkennen zu können, welche Knoten gerade eingebunden oder tätig sind. Daher ist es eine vorteilhafte Möglichkeit, physikalischer Adressen von Knoten bzw. Datenverarbeitungsvorrichtungen in logischen Adressen zu übersetzen. Die physikalischen Adressen können dabei vorgebbar oder automatisch ermittelbar sein. Weiterhin ist von Vorteil, wenn Event-und Alarmmeldungen über einheitliche Kanäle geführt und zentral zugänglich sind, so daß geeignete Gegenmaßnahmen, beispielsweise ein Abruch der Dienstleistung, automatisch oder manuell einleitbar sind.

Nicht immer kann davon ausgegangen werden, daß es einen zweiten Knoten bzw. eine zweite Datenverarbeitungsvorrichtung gibt, die den gleichen Dienst erbringen kann und darüber hinaus die geeigneten erfindungsgemäßen Kopplungsmittel aufweist, um mit dem ersten Knoten eine verfügbarkeitserhöhende Verbindung einzugehen, also einen virtuellen Cluster zu bilden. Von Vorteil erweist sich hierbei wiederum, daß die erfindungsgemäßen Kopplungsmittel allein durch Software realisiert werden können. Daher kann auf einem Knoten, der zwar den gesuchten Dienst anbietet, aber nicht die erfindungsgemäßen Kopplungsmittel aufweist, eine Ferninstallation genau dieser Kopplungsmittel durchgeführt werden. Somit ist die größtmögliche Flexibilität beim Aufbau eines virtuellen Clusters gegeben.

Der beschriebene Anwendungsfall läuft in einem IP-Netz, nämlich dem Internet ab. Die Erfindung ist jedoch nicht darauf beschränkt. Die Erfindung greift immer dann ein, wenn ein Cluster in einem Netzwerk gebildet werden soll, das nicht ausgezeichnete Datenverarbeitungsvorrichtungen aufweist.

## Patentansprüche

1. Datenverarbeitungsvorrichtung mit
- einer Kommunikationsschnittstelle zur Verbindung der einem ersten Netzwerkknoten zugeordneten Datenverarbeitungsvorrichtung mit einem Netzwerk, **gekennzeichnet durch**,
- Kopplungsmittel zur Bereitstellung von verfügbarkeitserhöhenden Funktionen in Verbindung mit mindestens einer weiteren, einem weiteren Netzwerkknoten zugeordneten, mit dem Netzwerk verbundenen, Kopplungsmittel aufweisenden Datenverarbeitungsvorrichtung, wobei das Netzwerk ein solches Netzwerk ist, bei dem Datenverarbeitungsvorrichtungen nicht an einer zentralen Stelle registriert und dort konfigurierbar sind.

2. Datenverarbeitungsvorrichtung nach Anspruch 1,
**dadurch gekennzeichnet, daß** die Kopplungsmittel so ausgelegt sind, daß sie die verfügbarkeitserhöhenden Funktionen automatisch bereit stellen;

3. Datenverarbeitungsvorrichtung nach Anspruch 1,
daß Mittel zur gemeinsamen Administrierung der verfügbarkeitserhöhenden Funktionen der Datenverarbeitungsvorrichtung und der mindestens einen weiteren Datenverarbeitungsvorrichtung vorgesehen sind.

4. Datenverarbeitungsvorrichtung nach Anspruch 1,
**dadurch gekennzeichnet, daß** die verfügbarkeitserhöhende Funktion der Kopplungsmittel der Datenverarbeitungsvorrichtung eine Speicherreplikation von der Datenverarbeitungsvorrichtung auf die weitere Datenverarbeitungsvorrichtung durchführt.

5. Datenverarbeitungsvorrichtung nach Anspruch 1,
**dadurch gekennzeichnet, daß** die verfügbarkeitserhöhenden Funktionen eine Parallelberechnung auf der Datenverarbeitungsvorrichtung und der mindestens einen weiteren Datenverarbeitungsvorrichtung ausführen.

6. Datenverarbeitungsvorrichtung nach Anspruch 1,
**dadurch gekennzeichnet, daß** die verfügbarkeitserhöhenden Funktionen eine Übersetzung physikalischer Adressen der mindestens einen weiteren Datenverarbeitungsvorrichtung; die vorgebbar oder automatisch ermittelbar sind, in logische Adressen einleiten, wobei die Übersetzung durch die Datenverarbeitungsvorrichtung ausgeführt wird.

7. Datenverarbeitungsvorrichtung nach Anspruch 1,
**dadurch gekennzeichnet, daß** die verfügbarkeitserhöhenden Funktionen Event- und Alarmmeldungen über einheitliche Kanäle führen, wobei die Meldungen zentral zugänglich sind.

8. Datenverarbeitungsvorrichtung nach Anspruch 1,
**dadurch gekennzeichnet, daß** die verfügbarkeitserhöhende Funktion der Kopplungsmittel der Datenverarbeitungsvorrichtung Zeitgeberobjekte der mindestens einen weiteren Datenverarbeitungsvorrichtung redundant bereitstellt.

9. Datenverarbeitungsvorrichtung nach Anspruch 1,
**dadurch gekennzeichnet, daß** die verfügbarkeitserhöhende Funktion der Kopplungsmittel der Datenverarbeitungsvorrichtung die Ansprechbarkeit der mindestens einen weiteren Datenverarbeitungsvorrichtung überwacht.

10. Datenverarbeitungsvorrichtung nach Anspruch 9,
**dadurch gekennzeichnet, daß** Mittel zur Beendung verfügbarkeitserhöhender Funktionen durch Kopplung mit der mindestens einen weiteren Datenverarbeitungsvorrichtung, die nicht mehr ansprechbar ist, vorgesehen sind.

11. Datenverarbeitungsvorrichtung nach Anspruch 1,
**dadurch gekennzeichnet, daß** die verfügbarkeitserhöhende Funktion der Kopplungsmittel der Datenverarbeitungsvorrichtung eine automatische Installation einer Administrationsprogrammeinheit von der Datenverarbeitungsvorrichtung auf die mindestens eine weitere Datenverarbeitungsvorrichtung durchführt.

12. Verfahren zur Erhöhung der Verfügbarkeit von Dienstleistungen einer Datenverarbeitungsvorrichtung eines Knotens in einem Netzwerk, das auf dem Internet Protokoll basiert, mit den Schritten:
- Bereitstellen eines Kopplungsmittels mit verfügbarkeitserhöhenden Funktionen bei der Datenverarbeitungsvorrichtung,
- Stellen einer Anfrage an eine weitere, einem anderen Knoten des Netzwerks zugeordnete Datenverarbeitungsvorrichtung durch die Datenverarbeitungsvorrichtung, ob die weitere Datenverarbeitungsvorrichtung bereit ist, Dienste zur Erhöhung der Verfügbarkeit der Datenverarbeitungsvorrichtung bereitzustellen, wobei das Netzwerk ein solches Netzwerk ist, bei dem Datenverarbeitungsvorrichtungen nicht an einer zentralen Stelle registriert und dort konfigurierbar sind,
und
- falls die Anfrage im letzten Schritt von der weiteren Datenverarbeitungsvorrichtung bejaht wird, Koppeln der beiden Datenverarbeitungsvorrichtungen durch das Kopplungsmittel zu einem virtuellen Cluster und Ausführen der verfügbarkeitserhöhenden Funktionen des Kopplungsmittels.

13. Verfahren nach Anspruch 12, **dadurch gekennzeichnet, dass** auf der weiteren Datenverarbeitungsvorrichtung das Kopplungsmittel ferninstalliert wird, falls die weitere Datenverarbeitungsvorrichtung kein Kopplungsmittel aufweist.

## Claims

1. Data processing apparatus having
- a communication interface for connecting the data processing apparatus associated with a first network node to a network, **characterized by**
- coupling means for providing availability-increasing functions in conjunction with at least one further data processing apparatus which has coupling means, which is associated with a further network node and which is connected to the network, the network being a network of the kind in which data processing apparatuses are not registered and configurable at a central location.

2. Data processing apparatus according to Claim 1,
**characterized in that** the coupling means are designed in such a way that they automatically provide the availability-increasing functions.

3. Data processing apparatus according to Claim 1,
**characterized in that** there are means for jointly administering the availability-increasing functions of the data processing apparatus and of the at least one further data processing apparatus.

4. Data processing apparatus according to Claim 1,
**characterized in that** the availability-increasing function of the coupling means in the data processing apparatus carries out memory replication from the data processing apparatus to the further data processing apparatus.

5. Data processing apparatus according to Claim 1,
**characterized in that** the availability-increasing function carry out a parallel calculation on the data processing apparatus and on the at least one further data processing apparatus.

6. Data processing apparatus according to Claim 1,
**characterized in that** the availability-increasing functions initiate translation of physical addresses of the at least one further data processing apparatus, said physical addresses being predefinable or automatically determinable, into logical addresses, with the translation being carried out by the data processing apparatus.

7. Data processing apparatus according to Claim 1,
**characterized in that** the availability-increasing functions route event and alarm messages via uniform channels, with the messages being centrally accessible.

8. Data processing apparatus according to Claim 1,
**characterized in that** the availability-increasing function of the coupling means in the data processing apparatus provides timer objects of the at least one further data processing apparatus in redundant form.

9. Data processing apparatus according to Claim 1,
**characterized in that** the availability-increasing function of the coupling means in the data processing apparatus monitors the addressability of the at least one further data processing apparatus.

10. Data processing apparatus according to Claim 9,
**characterized in that** there are means for terminating availability-increasing functions by coupling to the at least one further data processing apparatus which can no longer be addressed.

11. Data processing apparatus according to Claim 1,
**characterized in that** the availability-increasing function of the coupling means in the data processing apparatus automatically installs an administration program unit from the first data processing apparatus on the at least one further data processing apparatus.

12. Method for increasing the availability of services on a data processing apparatus of a node in a network which is based on the Internet Protocol, having the following steps:
- a coupling means having availability-increasing functions is provided on the data processing apparatus,
- a request is made to a further data processing apparatus, associated with another node in the network, by the data processing apparatus regarding whether the further data processing apparatus is ready to provide services for increasing the availability of the data processing apparatus, the network being a network of the kind in which data processing apparatuses are not registered and configurable at a central location, and
- if the request in the last step is answered in the affirmative by the further data processing apparatus, then the two data processing apparatuses are coupled by the coupling means to form a virtual cluster and the availability-increasing functions of the coupling means are performed.

13. Method according to Claim 12, **characterized in that** the coupling means is installed remotely on the further data processing apparatus if the further data processing apparatus does not have a coupling means.

## Revendications

1. Dispositif de traitement de données
- avec une interface de communication pour la connexion du dispositif de traitement de données associé à un premier noeud de réseau à un réseau,
**caractérisé par**
- des moyens de couplage pour la fourniture de fonctions augmentant la disponibilité en connexion avec au moins un autre dispositif de traitement de données associé à un autre noeud de réseau, connecté au réseau et présentant des moyens de couplage, dans lequel le réseau est un réseau dans lequel des dispositifs de traitement de données ne sont pas enregistrés en un point central et configurables dans celui-ci.

2. Dispositif de traitement de données selon la revendication 1, **caractérisé en ce que** les moyens de couplage sont réalisés de telle manière qu'ils procurent automatiquement les fonctions augmentant la disponibilité.

3. Dispositif de traitement de données selon la revendication 1, **caractérisé en ce qu'**il est prévu des moyens pour l'administration commune des fonctions augmentant la disponibilité du dispositif de traitement de données et de l'au moins un autre dispositif de traitement de données.

4. Dispositif de traitement de données selon la revendication 1, **caractérisé en ce que** la fonction augmentant la disponibilité des moyens de couplage du dispositif de traitement de données réalise une duplication de la mémoire du dispositif de traitement de données sur l'autre dispositif de traitement de données.

5. Dispositif de traitement de données selon la revendication 1, **caractérisé en ce que** les fonctions augmentant la disponibilité effectuent un calcul parallèle sur le dispositif de traitement de données et sur l'au moins un autre dispositif de traitement de données.

6. Dispositif de traitement de données selon la revendication 1, **caractérisé en ce que** les fonctions augmentant la disponibilité effectuent une traduction d'adresses physiques de l'au moins un autre dispositif de traitement de données, qui sont prédéterminables ou déterminables automatiquement, en adresses logiques, dans lequel la traduction est exécutée par le dispositif de traitement de données.

7. Dispositif de traitement de données selon la revendication 1, **caractérisé en ce que** les fonctions augmentant la disponibilité conduisent des messages d'événements et d'alarme par des canaux unitaires, dans lequel les messages sont accessibles de façon centrale.

8. Dispositif de traitement de données selon la revendication 1, **caractérisé en ce que** la fonction augmentant la disponibilité des moyens de couplage du dispositif de traitement de données procure des objets d'horloge redondants de l'au moins un autre dispositif de traitement de données.

9. Dispositif de traitement de données selon la revendication 1, **caractérisé en ce que** la fonction augmentant la disponibilité des moyens de couplage du dispositif de traitement de données surveille la sensibilité de réponse de l'au moins un autre dispositif de traitement de données.

10. Dispositif de traitement de données selon la revendication 9, **caractérisé en ce qu'**il est prévu des moyens pour mettre fin à des fonctions augmentant la disponibilité par couplage avec l'au moins un autre dispositif de traitement de données, auquel on ne peut plus s'adresser.

11. Dispositif de traitement de données selon la revendication 1, **caractérisé en ce que** la fonction augmentant la disponibilité des moyens de couplage du dispositif de traitement de données effectue une installation automatique d'une unité de programme d'administration du dispositif de traitement de données sur l'au moins un autre dispositif de traitement de données.

12. Procédé pour augmenter la disponibilité de services d'un dispositif de traitement de données d'un noeud dans un réseau, qui est basé sur le protocole Internet, comportant les étapes suivantes:
- procurer un moyen de couplage avec des fonctions augmentant la disponibilité dans un dispositif de traitement de données;
- adresser une demande à un autre dispositif de traitement de données, associé à un autre noeud du réseau, au moyen du dispositif de traitement de données pour savoir si l'autre dispositif de traitement de données est prêt à fournir des services pour augmenter la disponibilité du dispositif de traitement de données, dans lequel le réseau est un réseau dans lequel les dispositifs de traitement de données ne sont pas enregistrés en un point central et configurables dans celui-ci; et
- au cas où la demande de la dernière étape est acceptée par l'autre dispositif de traitement de données, coupler les deux dispositifs de traitement de données par le moyen de couplage en une grappe virtuelle et exécuter les fonctions augmentant la disponibilité du moyen de couplage.

13. Procédé selon la revendication 12, **caractérisé en ce que** le moyen de couplage est installé à distance sur l'autre dispositif de traitement de données, dans le cas où l'autre dispositif de traitement de données ne présente pas de moyen de couplage.
